# EUROPÄISCHE PATENTANMELDUNG

(11) **EP 2 416 026 A1**
(43) Veröffentlichungstag der Anmeldung: **08.02.2012**
(21) Anmeldenummer: 10171959.9
(22) Anmeldetag: 05.08.2010
(51) Int. Cl.: F16D 11/14, F16D 3/18, F16D 1/10, F16D 25/061, F16D 25/12, F01D 5/02, F01D 25/12

(54) **Antriebsstrang für eine Gasturbine**

(71) Anmelder: Siemens Aktiengesellschaft, 80333 München (DE)
(72) Erfinder: Braun, Stefan, 47506, Neukirchen-Vluyn (DE); Butzeck, Christopher, 45481, Mülheim (DE); Hahn, Jürgen, 44797, Bochum (DE); Schröder, Peter, 45307, Essen (DE); Wigger, Hubertus Michael, 50823, Köln (DE)

(57) **Zusammenfassung**

Die Erfindung betrifft einen Antriebsstrang für eine Gasturbine mit einer Verdichterrotorwelle (100), einer Turbinenrotorwelle (200) und einer die beiden Rotorwellen verbindende kraftschlüssigen Kupplungseinrichtung (310), wobei die Kupplungseinrichtung (310) so ausgebildet ist, dass die Kraftschlussverbindung auch dann gegeben ist, wenn die beiden Rotorwellen gegeneinander verschoben sind. Die Kupplungseinrichtung (310) weist dabei in axiale Richtung der Rotorwellen (100,200) zumindest einen Durchgang (410) zum Durchführen von Kühlluft auf.

## Beschreibung

Die Erfindung betrifft einen Antriebsstrang gemäß dem Oberbegriff des Anspruchs 1, eine entsprechende Gasturbine gemäß Anspruch 6, sowie demgemäße Rotorwellen für den Verdichter und die Turbine einer solchen Gasturbine.

Gasturbinen umfassen im Wesentlichen einen Verdichter und eine nachgeschaltete Turbine, die über eine gemeinsame Rotorwelle in axialer Richtung verbunden sind. Wie bei jeder Maschine zur Energieerzeugung ist ein möglichst hoher Wirkungsgrad, also das Verhältnis von erzeugter zur eingesetzten Energie eine wesentliche Größe.

Bei Gasturbinen kommt daher das Verfahren der sogenannten hydraulischen Spaltoptimierung zum Einsatz um den Gesamtwirkungsgrad der Gasturbine zu optimieren. Dabei werden Turbine und Verdichter, die durch einen zentralen Zuganker miteinander verbunden sind, zusammen verschoben. Der Zuganker, der den gemeinsamen Rotor für Turbine und Verdichter bildet, ist dazu so gelagert und gespannt, dass er in Axialrichtung verschoben werden kann. Dadurch können die Turbinenspalte zugunsten des Turbinenwirkungsgrades verschoben werden. Gleichzeitig werden durch die damit verbundene Verschiebung des Verdichters aber auch die Verdichterspalte zum Nachteil des Verdichterwirkungsgrades verstellt. Um diesen gegenläufigen Effekt zu vermeiden und damit den Gesamtwirkungsgrad weiter zu optimieren wurde bereits angedacht, diesen gemeinsamen Rotor an der Schnittstelle von Verdichter zur Turbine aufzutrennen und die beiden Rotorteile über eine axiale Kupplung kraftschlüssig zu koppeln. Die Kupplung muss dabei aber so ausgeführt sein, dass der Kraftschluss auch noch bei einer axialen Verschiebung der Turbinenrotorwelle relativ zur Verdichterrotorwelle gegeben ist. Somit kann die Turbine verschoben und damit deren Wirkungsgrad optimiert werden, ohne dass gleichzeitig der Verdichter verschoben werden muss. Eine Erhöhung des Turbinenwirkungsgrads durch die hydraulische Spaltoptimierung führt damit nicht mehr gleichzeitig zu einer Verschlechterung des Verdichterwirkungsgrads, was dem eigentlichen Ziel entgegenwirken würde.

Aufgabe der Erfindung ist es, einen weiter verbesserten Antriebsstrang für eine Gasturbine herzustellen.

Diese Aufgabe wird gelöst mit einem Antriebsstrang für eine Gasturbine, mit einer Verdichterrotorwelle, einer Turbinenrotorwelle und einer die beiden Rotorwellen verbindenden kraftschlüssigen Kupplungseinrichtung, wobei die Kupplungseinrichtung so ausgebildet ist, dass die Kraftschlussverbindung auch dann gegeben ist, wenn die beiden Rotorwellen gegeneinander verschoben sind, und wobei die Kupplungseinrichtung in axialer Richtung der Rotorwellen zumindest einen Durchgang zum Durchführen von Kühlluft aufweist.

Durch den zumindest einen in der Kupplungseinrichtung vorgesehenen Durchgang kann somit weiterhin eine ausreichende Menge an Kühlluft im Innern der Gasturbine vom Verdichter zur Turbine gelangen, ohne dass der Kühlluftstrom durch die radiale Ausdehnung der Kupplungseinrichtung nennenswert behindert wird. Die Teildurchgänge des Kühlluftdurchgangs müssen dabei aber, wie auch die Kupplungseinrichtung selbst, so ausgebildet sein, dass ihre Funktion auch bei einer axialen Verschiebung der beiden Rotorachsen relativ zueinander gewährleistet ist. Erfindungsgemäße Ausbildungen dazu sind den Unteransprüchen zu entnehmen.

Die Erfindung soll nun anhand der nachfolgenden Figuren beispielhaft erläutert werden. Es zeigen:
- FIG 1: schematisch ein bekannter Antriebsstrang einer Gasturbine,
- FIG 2: schematisch eine erste erfindungsgemäße Ausbildung der Kupplungseinrichtung,
- FIG 3: schematisch ein zweites Ausführungsbeispiel,

- FIG 4: schematisch ein drittes Ausführungsbeispiel.

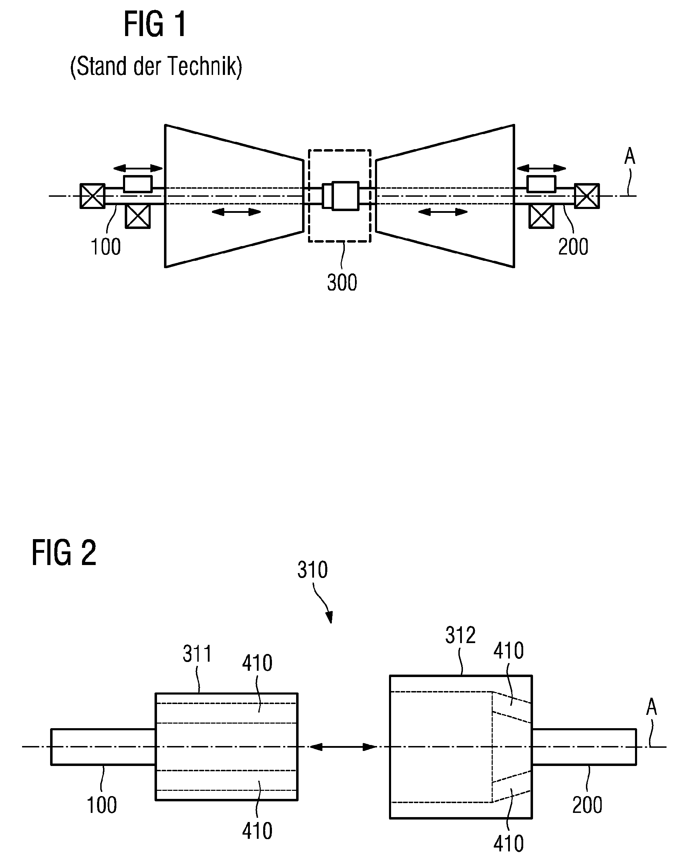

Der in FIG 1 schematisch dargestellte bekannte Antriebsstrang für eine Gasturbine besteht aus einem Verdichter mit einer Verdichterrotorwelle 100, einer Turbine mit einer Turbinenrotorwelle 200 und einer kraftschlüssigen Kupplungseinrichtung 300 zwischen Verdichter- und Turbinenrotorwelle. Über entsprechende Auflager (schematisch angedeutet) sind beide Rotorwellen so gelagert und gespannt, dass eine axiale Verschiebung beider Achsen möglich ist. Die Kupplung ist dabei so ausgebildet, dass der Kraftschluss auch noch bei einer definierten Verschiebung der beiden Rotorwellen zu- beziehungsweise gegeneinander gegeben ist.

Wesentlich für den Betrieb einer Gasturbine ist aber nicht nur die kraftschlüssige Kupplung bei einer axialen Verschiebung, sondern auch, dass bei einer solchen axialen Verschiebung der Turbinenrotorwelle relativ zur Verdichterrotorwelle die "Kopplung" des internen Kühlluftstroms zwischen Verdichter und Turbine erhalten bleibt.

FIG 2 zeigt dazu ein erstes Ausführungsbeispiel des erfindungsgemäßen Antriebsstrangs, bei dem entsprechende Teildurchgänge in der Kupplungseinrichtung für die Kühlluft vorgesehen sind. Hier dargestellt sind eine Verdichterrotorwelle 100, deren Ende als Zahnkranzzylinder 311 ausgebildet ist, sowie eine Turbinenrotorwelle 200, deren Ende als Zahnkranzbuchse 312 ausgebildet ist. Zahnkranzzylinder 311 und Zahnkranzbuchse 312 bilden somit korrespondierende Teile der Kupplungseinrichtung 310, die - wie mit dem Pfeil angedeutet - ineinandergeschoben werden können und dadurch, dass sie dann ineinandergreifen eine kraftschlüssige Kupplung der beiden Enden der Verdichterrotorwelle 100 und Turbinenrotorwelle 200 bewirken. Eine solche Kupplungseinrichtung 310 aus Zahnkränzen kann beispielsweise eine bekannte Hirth-Kupplung sein. Durch die zylindrische Ausdehnung in axialer Richtung ist die kraftschlüssige Kupplung auch bei dieser axialen Verschiebung der beiden Rotorwellen zueinander gegeben. Bei der hier dargestellten Ausführungsform sind in der Kupplungseinrichtung weiterhin mehrere über den Umfang verteilte Durchgänge 410 zur Durchführung von Kühlluft vom Verdichter zur Turbine vorgesehen. Diese müssen dabei im Zahnkranzzylinder 311 und der korrespondierenden Zahnkranzbuchse 312 aber so angeordnet sein, dass sie jeweils entsprechende Kanäle für die Kühlluft ausbilden und beispielsweise nicht radial so angeordnet sind, dass der Querschnitt des Teils eines Durchgangs im Zahnkranzzylinder nicht mit dem Querschnitt des Teils des Durchgangs in der Zahnkranzbuchse korrespondiert.

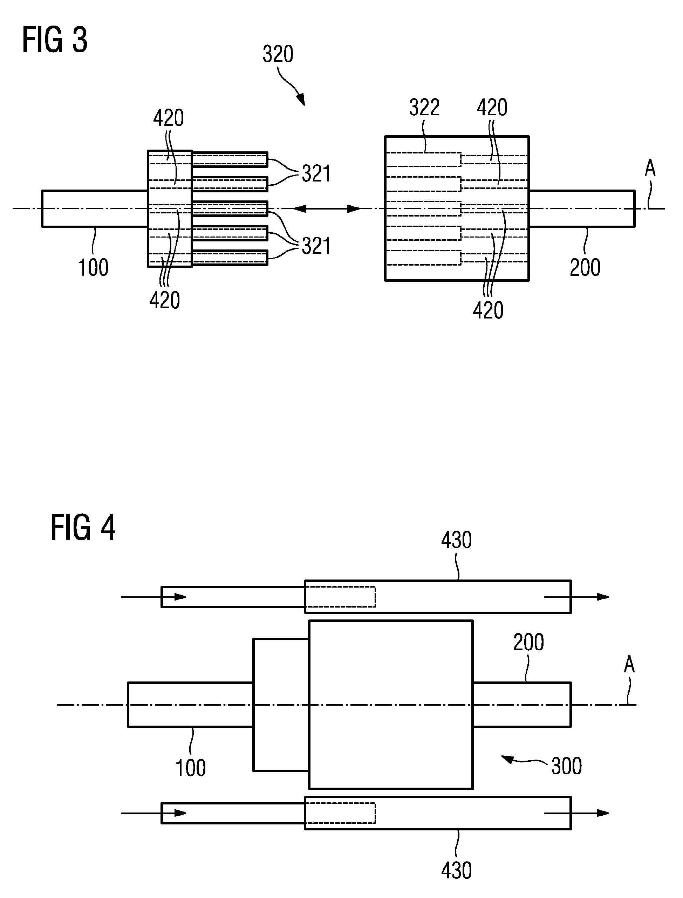

FIG 3 zeigt eine alternative Ausführungsform einer Kupplungseinrichtung 320. Das Ende der Verdichterrotorwelle 100 ist hier als Teil einer Stiftverzahnung ausgebildet, die aus einer Mehrzahl von in axialer Richtung ausgedehnter und über eine Basis untereinander verbundener Stifte 321 besteht. Diese greifen in eine korrespondierende Lochbuchse 322 des anderen, am Ende der Turbinenrotorwelle 200 ausgebildeten Teils der Kupplungseinrichtung. Durch die axiale Ausdehnung der Stifte 321 ist auch hier bei einer entsprechenden Verschiebung der beiden Rotorwellen 100 und 200 zueinander, weiterhin die kraftschlüssige Kupplung gewährleistet. Bei der hier gezeigten Ausführung können ein oder mehrere Stifte als Hohlstifte ausgebildet sein, so dass Kühlluft durch diese und die korrespondierende Lochbuchse 322 hindurchtreten kann.

FIG 4 zeigt eine weitere Ausführungsform einer Kupplungseinrichtung bei der Hohlstifte und Hülsen als Durchgänge für die Kühlluft außerhalb der eigentlich kraftschlüssigen Kupplung 300 ineinandergreifen und damit von dieser getrennt ist. Durch solche Teleskopleitungen 430 mit einem ersten Teleskopteil des Verdichters und einem zweiten, mit dem ersten korrespondierenden Teleskopteil der Turbine kann somit Kühlluft auch radial versetzt zur Rotorachse geführt und damit gezielt und gerichtet vom Verdichter zur Turbine geleitet werden.

Die vorliegende Erfindung ist nicht beschränkt auf die zuvor beschriebenen Ausführungen. Vielmehr sind auch Kombinationen, Abwandlungen bzw. Ergänzungen einzelner Merkmale denkbar, die zu weiteren möglichen Ausführungsformen der erfinderischen Idee führen können. So könnte beispielsweise die Ausführungsform aus FIG 4, mit einer der Ausführungsformen aus FIG 2 oder FIG 3 kombiniert werden, um die Kühlluftführung noch weiter zu verbessern. Weiterhin müssen die Querschnitte der beiden Teile der Durchgänge in beiden Kupplungsteilen der Kupplungseinrichtung nicht identisch sein. Erfindungsgemäß genügt es bereits, wenn die korrespondierenden Teildurchgänge so ausgebildet sind, dass zumindest der durch einen Querschnitt vorgegebene Kühlluftdurchsatz nicht durch den Querschnitt des anderen Teils beschränkt wird. Erfindungswesentlich ist nur, dass der Antriebsstrang beziehungsweise die entsprechend ausgebildete Verdichter- und Turbinenrotorwelle sowohl eine ausreichende Durchführung von Kühlluft durch die Kupplungseinrichtung in der Gasturbine als auch eine sichere Momentübertragung zwischen den beiden Rotorwellen durch die kraftschlüssige Kupplungseinrichtung gewährleistet.

## Patentansprüche

1. Antriebsstrang für eine Gasturbine mit einer Verdichterrotorwelle (100), einer Turbinenrotorwelle (200) und einer die beiden Rotorwellen (100,200) verbindenden kraftschlüssigen Kupplungseinrichtung (300,310,320), wobei die Kupplungseinrichtung (300,310,320) so ausgebildet ist, dass die Kraftschlussverbindung auch dann gegeben ist, wenn die beiden Rotorwellen (100,200) gegeneinander verschoben sind, **dadurch gekennzeichnet , dass** die Kupplungseinrichtung (300,310,320) in axialer Richtung der Rotorwellen (100,200) zumindest einen Durchgang (410,420,430) zum Durchführen von Kühlluft aufweist.

2. Antriebsstrang nach Anspruch 1,
**dadurch gekennzeichnet, dass** die Kupplungseinrichtung als Kraftschlussverbindung eine Hirthverzahnung (310), bestehend aus einem Zahnkranzzylinder (311) und einer korrespondierenden Zahnkranzbuchse (312), umfasst und zumindest einen Durchgang (410) im Zahnkranzzylinder (311) aufweist.

3. Antriebsstrang nach Anspruch 1,
**dadurch gekennzeichnet , dass** die Kupplungseinrichtung als Kraftschlussverbindung eine Stiftverzahnung (320), bestehend aus einer Mehrzahl von in axialer Richtung ausgedehnter und untereinander verbundener Stifte (321) und einer korrespondierenden Lochbuchse (322), umfasst und als Durchgang zumindest ein Stift als Hohlstift (420) ausgeführt ist.

4. Antriebsstrang nach einem der Ansprüche 1 bis 3, **dadurch gekennzeichnet, dass** die Kraftschlussverbindung und der Durchgang (430) getrennt sind.

5. Antriebsstrang nach Anspruch 4,
**dadurch gekennzeichnet, dass** der Durchgang (430) eine Teleskopleitung mit einem ersten Teleskopteil an der Verdichterrotorwelle (100) und mit diesem ersten Teleskopteil korrespondierenden zweiten Teleskopteil an der Turbinenrotorwelle (200) ist, wobei die Teleskopleitung senkrecht zur axialen Richtung (A) räumlich versetzt zu der Kraftschlussverbindung angeordnet ist.

6. Gasturbine mit einem Verdichter, einer Turbine und einem Antriebsstrang nach einem der Ansprüche 1 bis 5.

7. Verdichterrotorwelle (100) für eine Gasturbine, wobei ein mit einer Turbinenrotorwelle (200) verbindbares Ende der Verdichterrotorwelle so ausgebildet ist, dass es als Teil einer kraftschlüssigen Kupplungseinrichtung (311,321) in einem Antriebsstrang nach Anspruch 1 bis 5 Verwendung findet.

8. Turbinenrotorwelle (200) für eine Gasturbine, wobei ein mit einer Verdichterrotorwelle (100) verbindbares Ende der Turbinenrotorwelle so ausgebildet ist, dass es als Teil einer kraftschlüssigen Kupplungseinrichtung (312,322) in einem Antriebsstrang nach Anspruch 1 bis 5 Verwendung findet.
